# FASCICULE DE BREVET EUROPEEN

(11) **EP 3 077 179 B1**
(45) Date de publication et mention de la délivrance du brevet: **19.06.2019**
(21) Numéro de dépôt: 14808983.2
(22) Date de dépôt: 05.12.2014
(51) Int. Cl.: B29C 64/153, B22F 3/105, B33Y 10/00, B33Y 30/00

(54) **MACHINE POUR LA FABRICATION ADDITIVE À BASE DE POUDRE**
MASCHINE ZUR PULVERBASIERTEN ADDITIVEN FERTIGUNG
MACHINE FOR POWDER-BASED ADDITIVE MANUFACTURING

(30) Priorité: 05.12.2013 FR 1362183
(43) Date de publication de la demande: 12.10.2016
(73) Titulaire: Compagnie Générale des Etablissements Michelin, 63000 Clermont-Ferrand (FR)
(72) Inventeur: DE LAJUDIE, Christophe, F-63040 Clermont-Ferrand Cedex 9 (FR); ANGELE, Ludovic, F-63040 Clermont-Ferrand Cedex 9 (FR)
(74) Mandataire: Noel, Luminita
(86) Numéro de dépôt international: PCT/EP2014/076701
(87) Numéro de publication internationale: WO 2015/082677

(56) Documents cités:
- EP-A1- 1 517 779
- WO-A2-2013/178825

## Description

L'invention concerne les machines et les procédés pour la fabrication additive à base de poudre par frittage ou fusion des grains de ladite poudre à l'aide d'un faisceau énergétique comme un rayonnement électromagnétique (par exemple un faisceau laser) ou un faisceau de particules (par exemple un faisceau d'électrons).

L'invention se rapporte en particulier à l'architecture de la machine et aux moyens et procédés pour la mise en couche, c'est à dire pour la préparation du lit de poudre préalable au frittage ou à la fusion de ladite couche à l'aide du faisceau énergétique.

Le document EP-1641580-B1 divulgue en particulier un dispositif de mise en couche pour le frittage par laser de poudres (métalliques ou céramiques). Ce dispositif comprend un plateau d'alimentation permettant de stocker la poudre et de la délivrer en quantité contrôlée à un cylindre rainuré apte d'une part à transférer et répartir ladite quantité de poudre sur le plateau de dépôt lors d'un premier passage du cylindre sur la zone de travail et d'autre part à compacter la poudre par un mouvement de roulage du cylindre lors d'un deuxième passage. La poudre est ensuite soumise au faisceau laser. Un inconvénient de cette configuration est l'encombrement et le coût important du plateau d'alimentation. Un autre inconvénient vient du fait que la longueur de la zone de travail est limitée par le périmètre utile du cylindre.

Le document WO-2011/007087-A2 divulgue un dispositif de mise en couche pour la fusion par laser de poudres. Ce dispositif comprend un plateau d'alimentation permettant de stocker la poudre et de la délivrer en quantité contrôlée à un système de raclette apte à alimenter le plateau de dépôt et de cylindre(s) apte(s) à répartir et compacter ladite quantité de poudre sur le plateau de dépôt. La poudre est ensuite soumise au faisceau laser. Un inconvénient de cette configuration est l'encombrement et le coût important du plateau d'alimentation ainsi que la nécessaire complexité de la machine du fait du grand nombre d'outillages à contrôler (raclette, cylindre(s) de répartition et/ou de compactage, vérins des plateaux).

Le document US-2005/0263934-A1 divulgue un dispositif de mise en couche pour le frittage par laser de poudres. Ce dispositif comprend des moyens d'alimentation et de dosage permettant de délivrer la poudre en quantité contrôlée à proximité de la zone de travail. L'alimentation se fait par gravité à partir d'un stock de poudre placé au-dessus. Une raclette permet de régler l'épaisseur d'un tas de poudre qui est ensuite soumis à une opération de préchauffage. Un cylindre rotatif permet ensuite de transférer et répartir ladite quantité de poudre préchauffée sur la zone de travail. Une quantité de poudre peut également être déposée sur le capot du chariot emportant le cylindre d'un côté à l'autre de la zone de travail et ainsi n'être mise en oeuvre qu'au cours du retour du cylindre. Un inconvénient de cette configuration est le risque qu'une partie (même infime) de la poudre soit retenue sur le capot et tombe ensuite dans la zone de travail lors du passage du chariot au-dessus du lit de poudre. Ce risque n'est pas acceptable dans le cadre d'une utilisation industrielle.

Le document WO2013/092757 décrit une machine et un procédé pour la fabrication additive à base de poudre dans lequel un dispositif de mise en couche comporte des moyens d'alimentation et des moyens de dosage se déplaçant de manière solidaire avec des moyens de répartition de la poudre sur la zone de travail.

Un problème commun aux différentes propositions de l'état de la technique est une faible productivité globale de l'installation car lors des phases de mise en couche, la fusion est interrompue et, réciproquement, lors des phases de fusion, la mise en couche ne peut pas se dérouler.

L'invention pallie l'un au moins des inconvénients décrits ci-dessus en proposant une machine selon la revendication 1.

La divulgation décrit une machine pour la fabrication additive par frittage ou fusion de poudre à l'aide d'un faisceau énergétique agissant sur une couche de poudre dans une zone de travail, ladite machine comprenant un dispositif de mise en couche de ladite poudre, ledit dispositif comprenant :
- des moyens de répartition de la poudre aptes à parcourir la zone de travail afin de répartir la poudre en une couche d'épaisseur finale adaptée à la fabrication additive,
- des moyens d'alimentation aptes à transférer la poudre par gravité aux moyens de répartition,
- des moyens de dosage aptes à contrôler la quantité de poudre transférée aux moyens de répartition,
dans laquelle les moyens d'alimentation et les moyens de dosage sont mobiles avec les moyens de répartition, ladite machine comprenant:
- deux zones de travail distinctes,
- deux plateaux de travail distincts et mobiles indépendamment l'un de l'autre,
- chacun des deux plateaux de travail est associé à une seule des deux zones de travail,

En outre:
- le dispositif de mise en couche comprend un chariot mobile portant les moyens d'alimentation, les moyens de dosage et les moyens de répartition, ledit chariot mobile étant commun aux deux zones de travail,
- la machine comprend une zone d'attente centrale située entre les deux zones de travail, ladite zone d'attente centrale étant apte à accueillir le chariot mobile du dispositif de mise en couche, et
- le dispositif de mise en couche est configuré de manière sensiblement symétrique afin d'être apte à parcourir chaque zone de travail en direction de la zone d'attente centrale lors d'une opération de mise en couche.

De préférence, la machine comprend en outre des moyens de stockage de la poudre, les moyens de stockage étant placés plus haut que les zones de travail.

De préférence, la machine comprend une source propre et des moyens de contrôle du faisceau énergétique propres à chacune des deux zones de travail.

De préférence, le dispositif de mise en couche est configuré de manière à réaliser la mise en couche en un seul passage sur une zone de travail.

De préférence, les moyens de stockage comprennent au moins une trémie, ladite au moins une trémie étant également portée par le chariot mobile avec les moyens d'alimentation, les moyens de dosage et les moyens de répartition.

De préférence, les moyens de dosage comprennent au moins un cylindre doseur rotatif pourvu d'au moins une cavité, de préférence une rainure apte à définir une dose de poudre lors du dosage.

De préférence, les moyens de répartition comprennent au moins un cylindre répartiteur.

De préférence, la hauteur dudit au moins un cylindre répartiteur est ajustable en fonction de la position angulaire dudit cylindre.

Les moyens de dosage comprennent deux cylindres doseurs rotatifs placés de part et d'autre des moyens de répartition, chacun des deux cylindres doseurs étant affectés à l'une des deux zones de travail.

De préférence, les moyens de répartition utilisent un cylindre répartiteur unique et commun aux deux zones de travail.

Selon un autre aspect de la divulgation, les moyens de répartition comprennent deux cylindres répartiteurs placés de part et d'autre des moyens de dosage et d'alimentation, chacun des deux cylindres répartiteurs étant affectés à l'une des deux zones de travail.

De préférence, les moyens de dosage utilisent un cylindre doseur rotatif unique et commun aux deux zones de travail.

Selon un autre mode de réalisation préféré, les moyens de répartition comprennent deux raclettes placées de part et d'autre des moyens de dosage et d'alimentation, chacune des deux raclettes étant affectées à l'une des deux zones de travail.

De préférence, la machine comprend en outre deux cylindres de compactage dont le déplacement sur la zone de travail est solidaire du déplacement des moyens de répartition, chacun des deux cylindres de compactage étant affecté à l'une des deux zones de travail.

La divulgation décrit également un procédé pour la fabrication additive de pièces par frittage ou fusion de poudre à l'aide d'un faisceau énergétique comprenant des étapes consistant successivement à :
A- déposer une couche de poudre dans une zone de travail à l'aide d'un dispositif de mise en couche,
B- Fusionner ladite couche de poudre dans la zone de travail à l'aide du faisceau énergétique selon un motif correspondant à une section des pièces,
C- Reproduire les étapes A et B jusqu'à ce que les pièces soient terminées,
ledit procédé comprenant:
- l'utilisation d'une machine comportant deux zones de travail distinctes, chaque zone de travail reposant sur un plateau de travail distinct,
- l'utilisation d'un dispositif de mise en couche unique pour les deux zones de travail, le dispositif de mise en couche parcourant chaque zone de travail en direction d'une zone d'attente centrale située entre les deux zones de travail lors d'une opération de mise en couche.

De préférence, on utilise une source propre et des moyens de contrôle du faisceau énergétique propres à chacune des deux zones de travail.

L'invention sera mieux comprise grâce à la suite de la description, qui s'appuie sur les figures suivantes :
- La figure 1 est une vue schématique en coupe d'une première machine selon l'état de la technique.
- La figure 2 est une vue schématique en coupe d'une deuxième machine selon l'état de la technique.
- La figure 3 est une vue schématique en coupe d'une machine ne représentant pas un mode de réalisation de l'invention.
- Les figures 4, 5, 6 et 7 sont des vues schématiques d'étapes typiques de procédé de fabrication additive à base de poudre.
- Les figures 8 et 9 sont des vues schématiques en coupe d'une machine selon l'invention.
- La figure 10 est une vue schématique en coupe du dispositif de mise en couche d'une machine ne représentant pas un mode de réalisation de l'invention.
- La figure 11 est une vue schématique en coupe du dispositif de mise en couche d'une machine ne représentant pas un mode de réalisation de l'invention.

Sur les différentes figures, les éléments identiques ou similaires portent les mêmes références ou des références manifestement dérivées les unes des autres. La description de la structure et de la fonction de ces éléments identiques ou similaires n'est donc pas systématiquement reprise.

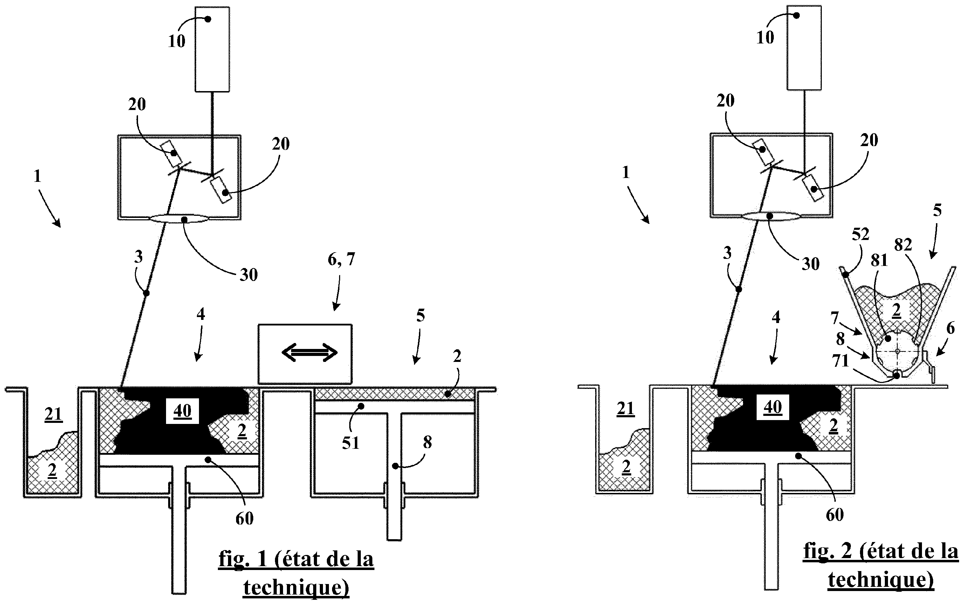

A la figure 1, on a représenté schématiquement une première machine selon l'état de la technique pour la fabrication additive d'une pièce 40. Une source énergétique, ici une source laser 10 émet un faisceau laser 3 dont l'orientation est contrôlée par des miroirs soumis à des galvanomètres 20. Une lentille optique 30 permet de focaliser le faisceau 3 au niveau de la zone de travail 4 afin de chauffer la couche supérieure de la poudre 2 selon un motif précis et ainsi réaliser de manière sélective la fusion de la poudre, le motif correspondant à une section de la pièce à réaliser. Après le traitement par le faisceau d'une couche de poudre, le plateau de travail 60 est abaissé d'une épaisseur unitaire et recouvert d'une nouvelle couche de poudre et ainsi de suite afin de former couche après couche la pièce 40. Selon les types de faisceau énergétique et les poudres utilisés, l'épaisseur d'une couche de poudre peut varier de quelques micromètres (par exemple 10um) à plusieurs centaines de micromètres (par exemple 500µm = 0.5 mm). Lorsque la pièce 40 est terminée, c'est à dire lorsque les centaines ou les milliers de couches nécessaires à sa construction ont été successivement solidifiées, la pièce est évacuée de la zone de travail.

L'ensemble des éléments de la machine permettant l'application d'une nouvelle couche de poudre sur la zone de travail est généralement appelé « dispositif de mise en couche ». Le dispositif de mise en couche de l'état de la technique comprend des moyens de stockage 5 et des moyens de répartition 6 de la poudre 2 sur la zone de travail 4. Comme décrit plus haut, les moyens de stockage de l'état de la technique utilisent généralement un plateau mobile verticalement 51 qui est similaire au plateau de travail 60. Les moyens de répartition 6 (non détaillés sur la figure 1) ont pour fonction de répartir une mince épaisseur de poudre sur l'ensemble de la zone de travail. Des moyens d'alimentation 7 (non détaillés sur la figure 1) ont pour fonction de transférer la poudre des moyens de stockage aux moyens de répartition 6. Les moyens de répartition et les moyens d'alimentation de l'état de la technique utilisent couramment des raclettes et/ou des cylindres portés par un ou plusieurs chariots, lesdits chariots étant mobiles entre les moyens de stockage 5 et la zone de travail 4. Des moyens de dosage 8, ici des moyens permettant de contrôler précisément la montée du plateau mobile 51, permettent de contrôler la quantité de poudre mise en oeuvre à chaque utilisation du dispositif de mise en couche. Lorsque les moyens de répartition ont parcouru toute la zone de travail (vers la gauche de la figure 1), le surplus de poudre est poussé dans un bac de récupération 21.

La figure 2 représente une machine selon l'état de la technique telle que décrite dans le document WO2013/092757. Les moyens de stockage 5 ont la forme d'une trémie 52 placée au-dessus du plan de la zone de travail 4. Les moyens de répartition 6 utilisent une raclette. La raclette est solidaire de la trémie. Les moyens d'alimentation 7 utilisent une ouverture inférieure 71 de la trémie pour transférer par gravité la poudre vers les moyens de répartition 6. Des moyens de dosage, sous la forme d'un cylindre doseur rotatif 81, permettent de contrôler la quantité de poudre transférée. Le dispositif de mise en couche parcourt la zone de travail afin de répartir une couche de poudre 2. En fin de course, le surplus de poudre est poussé dans un bac de récupération 21.

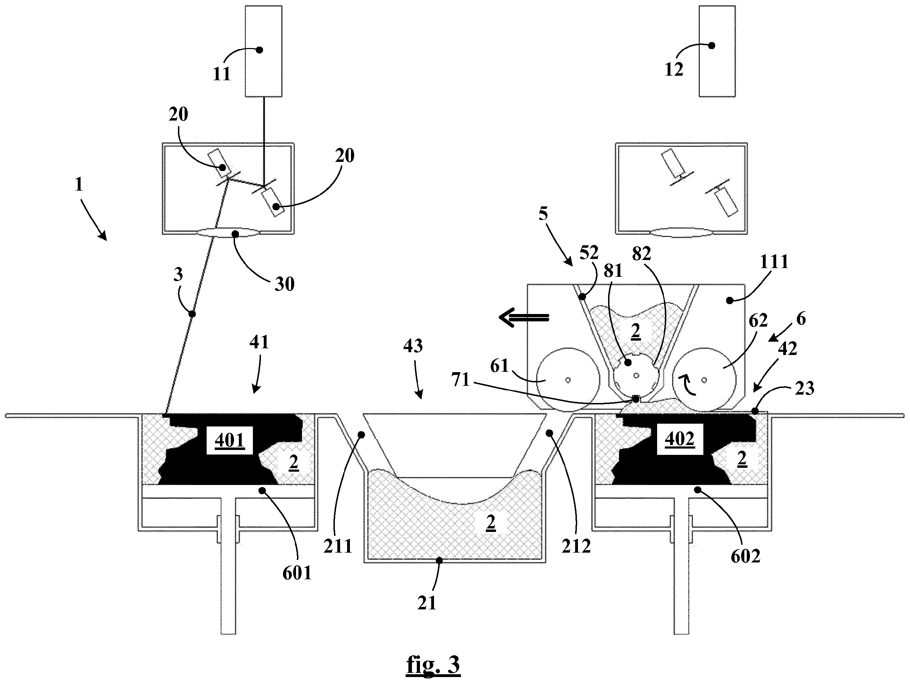

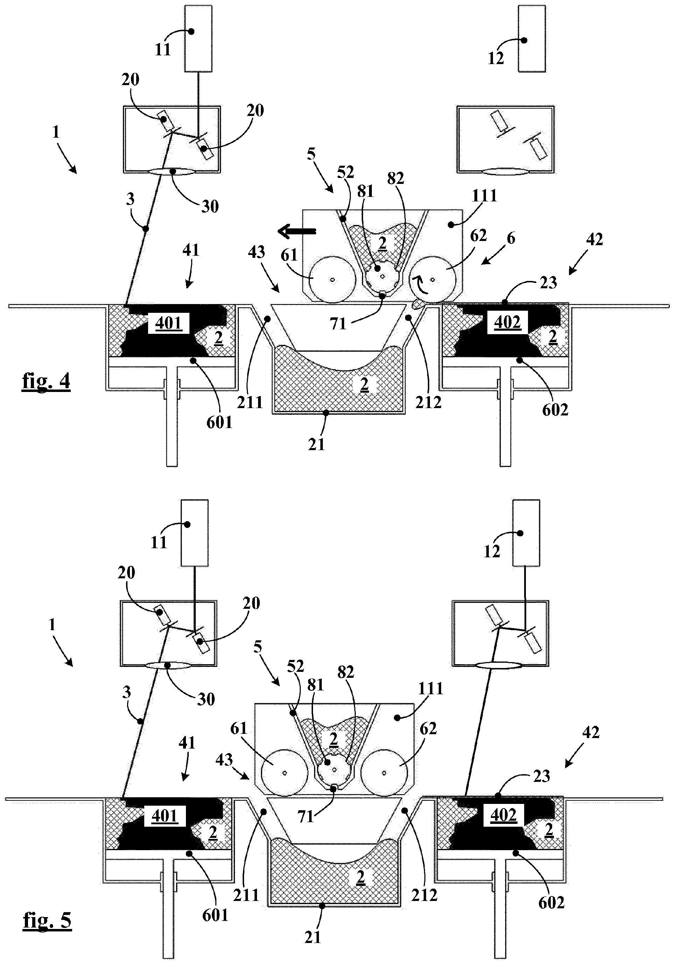

La figure 3 représente une machine qui ne correspond pas un mode de réalisation selon l'invention. Une caractéristique essentielle de la machine selon l'invention est qu'elle comporte deux zones de travail 41 et 42 distinctes et que le dispositif de mise en couche est commun à ces deux zones de travail. La machine comporte donc deux plateaux de travail 601 et 602 distincts et mobiles indépendamment l'un de l'autre, chacune des deux zones de travail reposant sur son propre plateau de travail. Les deux zones de travail sont coplanaires. La source et le contrôle du faisceau énergétique 3 sont représentés identiques à l'état de la technique. Ceci n'est qu'un exemple. Comme décrit au préambule de la demande, l'invention s'applique en réalité à tous les types de fabrication additive à base de poudre par frittage ou par fusion totale des grains de ladite poudre à l'aide d'un faisceau énergétique comme un rayonnement électromagnétique (par exemple un faisceau laser) ou un faisceau de particules (par exemple un faisceau d'électrons). La suite de la présente description se concentre donc principalement sur le procédé et le dispositif de mise en couche et sur la coopération du dispositif de mise en couche avec les deux zones de travail. La machine comprend une zone d'attente centrale 43 située entre les deux zones de travail 41 et 42. Lorsque le chariot mobile 111 du dispositif de mise en couche est stationné dans la zone d'attente (voir figure 5), les deux zones de travail sont utilisables pour la fusion. Le fait que la zone d'attente soit située entre les deux zones de travail permet au dispositif de mise en couche d'entrer en action sur n'importe laquelle des deux zones de travail sans interrompre ni perturber le travail sur l'autre zone.

La machine comprend en outre pour chaque zone de travail une source propre (11, 12) et des moyens de contrôle du faisceau énergétique propres. On peut cependant utiliser une source unique que l'on déplace ou dont on dévie le faisceau alternativement sur une zone ou sur l'autre comme décrit par exemple dans le document EP 1517779-B1. Le taux d'utilisation de la source commune peut alors tendre vers les 100%. L'intérêt d'une configuration utilisant une source unique est principalement de réduire encore le coût de la machine selon l'invention. Dans le cas préféré représenté ici où la machine comprend une source propre à chaque zone de travail, il est possible à la machine de réaliser simultanément la fusion de la poudre dans les deux zones de travail gauche 41 et droite 42 lorsque le chariot du dispositif de mise en couche est positionné dans la zone d'attente centrale 43 (voir figure 5). On comprend que la productivité globale de la machine est ainsi favorisée bien que les taux d'utilisation de chacune des deux sources restent bien inférieurs à 100%.

Une autre caractéristique essentielle de l'invention est que, au cours de l'opération de mise en couche, le chariot mobile du dispositif de mise en couche parcourt systématiquement la zone de travail en direction de la zone d'attente centrale. Ceci signifie que le dispositif de mise en couche est configuré de manière à travailler de la droite vers la gauche sur la zone de travail droite 42 (comme cela est représenté sur la figure 3) et de la gauche vers la droite sur la zone de travail gauche 41. Le dispositif de mise en couche et son fonctionnement sont donc sensiblement symétriques. De préférence, le bac de récupération 21 est commun aux deux zones de travail et se situe sous la zone d'attente centrale 43. On comprend que la poudre excédentaire pour la zone de travail gauche 41 est poussée dans la cheminée 211 et pour la zone de travail 42 dans la cheminée 212. Les deux cheminées convergent dans le bac de récupération commun 21.

Les moyens de stockage 5 ont ici la forme d'une trémie 52 qui se déplace au-dessus du plan des zones de travail 41 et 42. Les moyens de répartition 6 utilisent ici des cylindres répartiteurs 61 et 62. Le cylindre droit 62 assure la répartition de la poudre pour la zone droite 42 et le cylindre gauche 61 assure la répartition de la poudre pour la zone gauche 41. Les moyens d'alimentation 7 utilisent simplement une ouverture inférieure 71 de la trémie pour transférer par gravité la poudre 2 vers les moyens de répartition 6. Des moyens de dosage, ici sous la forme d'un cylindre doseur rotatif 81 comprenant au moins une cavité, permettent de contrôler la quantité de poudre transférée. Ladite au moins une cavité, de préférence une rainure 82, définit une dose reproductible de poudre. La ou les rainures(s) s'étend(ent) sensiblement sur toute la longueur utile du cylindre doseur 81, c'est à dire sensiblement sur toute la largeur des zones de travail 41 et 42. Les dimensions et la forme de la section des rainures 82 peuvent varier le long du cylindre 81 afin d'améliorer encore la répartition de la poudre sur toute la zone de travail.

Aux figures 3 à 7, on a représenté schématiquement des étapes successives typiques du procédé de fabrication additive à base de poudre.

Aux figures 3 et 4, on voit qu'une couche 23 de poudre 2 est progressivement déposée sur la zone de travail droite 42 par le dispositif de mise en couche. En parallèle de cette mise en couche, la fusion d'une couche de poudre précédemment déposée se déroule dans l'autre zone de travail (zone de travail gauche 41) pour constituer progressivement la pièce gauche 401.

Plus précisément, on voit aux figures 3 et 4 qu'une quantité de poudre est déposée sur la zone de travail à travers l'ouverture inférieure 71. Ladite quantité de poudre peut correspondre à une ou plusieurs doses, c'est à dire au contenu d'une ou plusieurs rainures 82 du cylindre doseur 81. Le cylindre répartiteur 62 assure la formation d'une couche de poudre d'épaisseur contrôlée et repousse le surplus de poudre dans le bac de récupération 21 par l'intermédiaire de la cheminée droite 212. Le cylindre répartiteur peut être fixe ou de préférence contrarotatif, c'est à dire animé d'un mouvement de rotation dans le sens inverse de son déplacement (comme indiqué par une flèche sur les figures).

Comme représenté à la figure 5, lorsque la mise en couche est terminée sur la zone de travail droite 42, le chariot mobile 111 du dispositif de mise en couche peut se positionner dans la zone d'attente centrale 43 afin d'être immédiatement disponible pour la préparation d'une nouvelle couche de poudre sur l'une ou l'autre des zones de travail. Il est alors possible que la fusion de la poudre se déroule simultanément sur les deux zones de travail comme représenté ici.

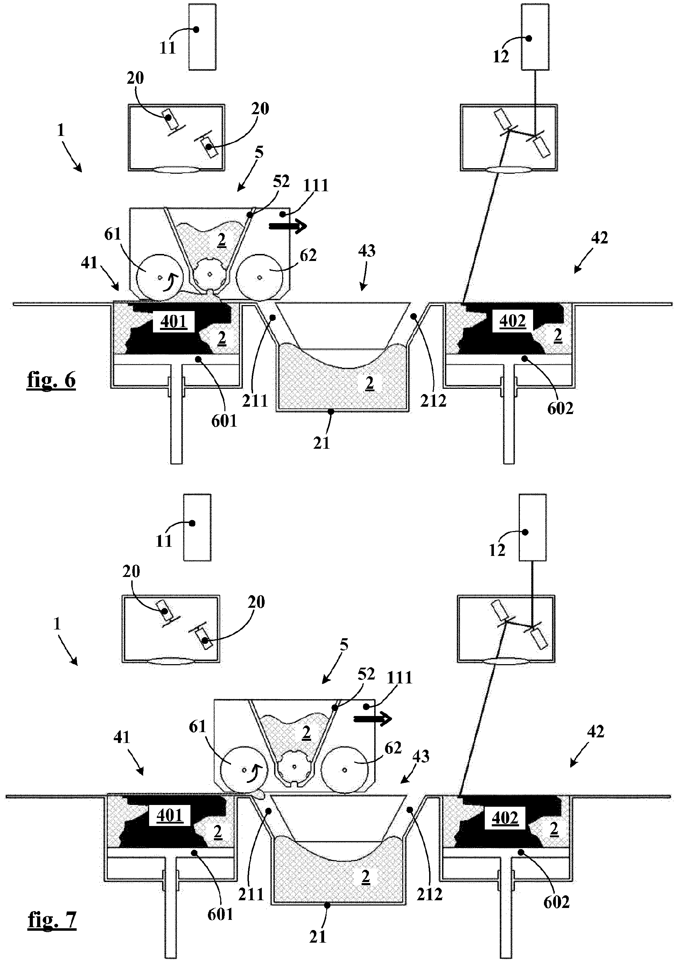

Dès que la fusion d'une couche est terminée sur la zone de travail gauche 41, le plateau de travail gauche 401 peut être abaissé et le dispositif de mise en couche peut venir déposer une nouvelle couche de poudre sur cette zone de travail comme représenté aux figures 6 et 7. Ainsi, l'unique dispositif de mise en couche est utilisé alternativement sur les deux zones de travail. Bien sûr, on comprend qu'en pratique les séquences de mise en couche ne sont pas nécessairement alternées entre les deux zones de travail. Cela dépend du temps effectivement nécessaire à la fusion pour chaque couche de chacune des deux pièces 401 et 402. Par exemple, il se peut tout à fait que le temps de fusion d'une couche dans l'une des zones de travail soit relativement long alors que, dans le même temps, deux ou plusieurs couches peuvent être déposées et fusionnées dans l'autre zone de travail. Il se peut également que l'on multiplie les couches déposées et fusionnées sur l'une des pièces pendant que l'autre pièce est évacuée de la machine et/ou que l'on prépare la zone de travail pour la fabrication d'une nouvelle pièce. Ce qu'il faut donc retenir, c'est que la machine selon l'invention permet un travail pratiquement indépendant sur les deux zones de travail, en particulier dans le cas représenté ici où elle comprend deux sources de faisceau énergétique, une pour chaque zone de travail.

Dans cette configuration du dispositif de mise en couche, les moyens de stockage, de dosage et d'alimentation sont communs aux deux zones de travail. Au contraire, chacun des deux cylindres répartiteurs 61 et 62 est dédié à une seule zone de travail.

Sur la base de cette configuration, une deuxième manière de procéder consiste au contraire à prévoir que le chariot puisse également stationner à l'extérieur de la zone de travail. Dans ce cas la mise en couche peut s'opérer dans les deux sens de parcours sur chaque zone de travail. Les deux cylindres répartiteurs sont alors utilisés à tour de rôle selon le sens de déplacement du chariot sur une zone de travail donnée. Ainsi, le chariot ne passerait pas systématiquement par la zone d'attente centrale et donc conserverait le surplus de poudre entre les cylindres répartiteurs sans le pousser systématiquement dans le bac de récupération. Un avantage est alors une amélioration supplémentaire de la productivité de la machine et une consommation de poudre réduite.

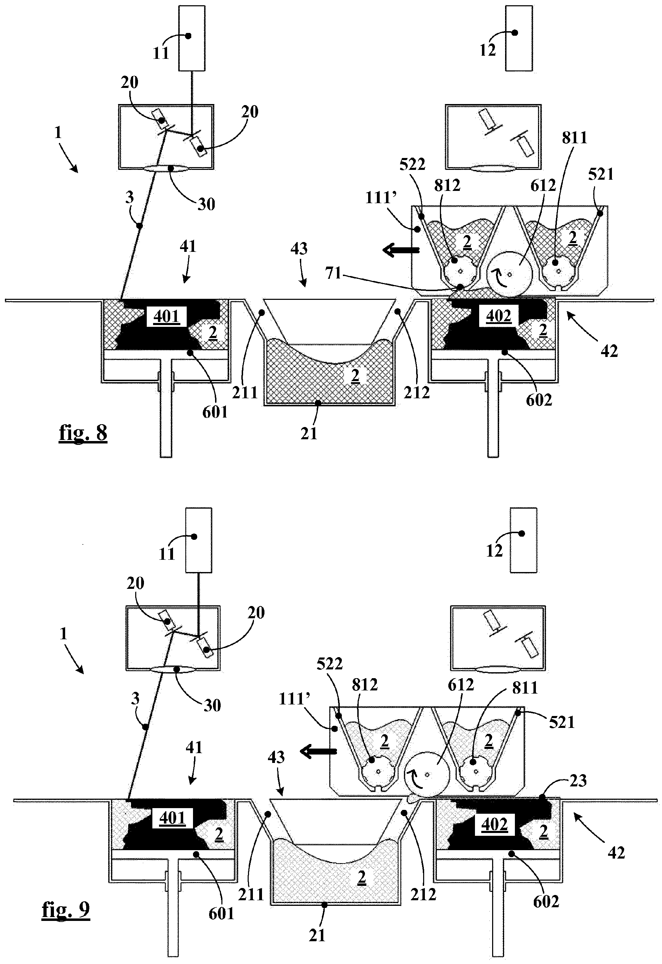

Aux figures 8 et 9, on a représenté un mode de réalisation selon l'invention dans lequel le dispositif de mise en couche comprend deux trémies 521 et 522 et deux cylindres doseurs rotatifs 811 et 812 placés de part et d'autre d'un cylindre répartiteur commun 612 au sein du chariot mobile 111'. La trémie gauche 522 et le cylindre doseur gauche 812 sont utilisés pour la mise en couche de la zone de travail droite 42 alors que la trémie droite 521 et le cylindre doseur droit 811 sont utilisés pour la mise en couche de la zone de travail gauche 41. Le cylindre répartiteur commun 612 est utilisé pour les deux zones de travail. S'il est contrarotatif, son sens de rotation est inversé pour l'une des zones de travail par rapport à l'autre. Les déplacements de ce dispositif de mise en couche sur les deux zones de travail sont cependant similaires à ceux décrits aux figures 2 à 7 pour le premier mode de réalisation. Ce fonctionnement ne sera donc pas illustré à nouveau ici.

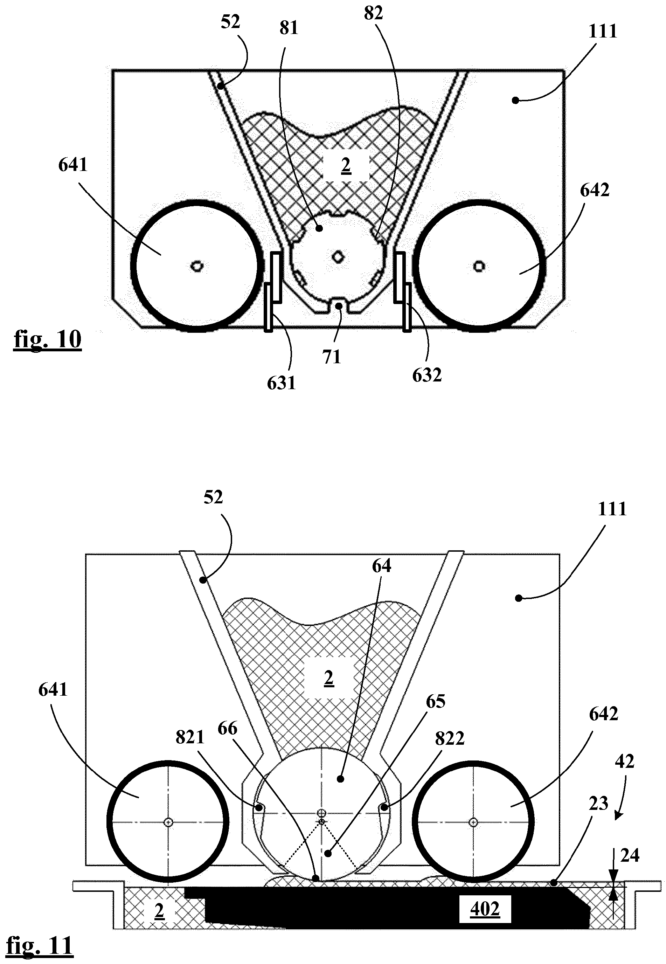

La figure 10 illustre une configuration dans laquelle les moyens de répartition utilisent des raclettes 631 et 632 également solidaires du chariot 111. On comprend que la raclette gauche 631 est destinée à répartir la poudre sur la zone de travail gauche dans un mouvement de gauche à droite du chariot 111 et que la raclette droite 632 est destinée à répartir la poudre sur la zone de travail droite dans un mouvement de droite à gauche du chariot 111. De préférence, des cylindres compacteurs fixes ou contrarotatifs 641 et 642 également portés par le chariot assurent un compactage supplémentaire du lit de poudre. Le cylindre gauche 641 est utilisé pour la zone de travail gauche et le cylindre droit 642 est utilisé pour la zone de travail droite. Le reste de la machine et le fonctionnement d'un tel dispositif de mise en couche sont conformes à ce qui est décrit plus haut en référence aux figures 3 à 7.

A la figure 11, on a représenté on a représenté une configuration dans laquelle les moyens de dosage et les moyens de répartition utilisent un cylindre rotatif commun 64. La fonction de dosage est assurée grâce à une rainure 821 ou 822 du cylindre commun 64 selon le principe décrit plus haut en référence à la figure 3. La fonction de répartition est assurée par un secteur lisseur 65 du cylindre commun 64. De préférence, le cylindre commun 64 est fixe en rotation lors de son déplacement sur la zone de travail. Le secteur lisseur 65, c'est à dire la partie du cylindre commun destinée à la répartition de la poudre est symboliquement délimité par des traits pointillés. De préférence, ce secteur comporte un renflement 66. Ce renflement de faible hauteur dans l'absolu (par exemple quelques dixièmes de millimètres tout au plus) est à peine perceptible sur la figure malgré son amplification. Le fait que le secteur lisseur comporte un renflement 66 permet de régler finement l'épaisseur de lissage par le choix de la position angulaire adoptée par le cylindre commun 64 pendant l'opération de répartition de la poudre.

On comprend que sur la représentation de la figure 11, le dispositif de mise en couche traverse la zone de travail droite 402 comme décrit précédemment en poussant le tas de poudre 2 au-dessus de la pièce 402 pour lisser une couche de poudre 23 d'épaisseur finale 24.

De préférence, le dispositif de mise en couche de la figure 11 comprend en outre des cylindres fixes ou contrarotatifs 641 et 642 également portés par le chariot 111 et qui assurent un compactage supplémentaire du lit de poudre comme décrit plus haut pour le mode de réalisation de la figure 10.

De manière générale dans les configurations où le ou les cylindres répartiteurs ne sont pas contrarotatifs, chaque cylindre répartiteur est de préférence monté sur excentrique afin que sa hauteur par rapport au plan de la zone de travail soit ajustable en fonction de la position angulaire dudit cylindre. Le même principe peut, le cas échéant, s'appliquer également aux cylindres de compactage.

Les figures 8 et 9 illustrent une caractéristique essentielle de l'invention selon laquelle le dispositif de mise en couche permet de réaliser la mise en couche en un seul passage, c'est à dire en une seule traversée de la zone de travail, en balayant chacune des deux zones de travail de l'extérieur de la zone de travail vers la zone d'attente centrale. Ceci est vrai qu'il s'agisse de l'une ou de l'autre zone de travail.

On comprend qu'une couche peut donc être réalisée selon l'invention en un seul passage. On comprend également qu'afin d'améliorer encore la qualité géométrique de la couche de poudre, on peut en outre procéder à un deuxième passage des moyens de répartition sur la zone de travail (et donc un deuxième passage du chariot du dispositif de mise en couche) avant de soumettre la zone de travail au faisceau énergétique.

De préférence, la quantité de poudre stockée dans la trémie ou les trémies est suffisante pour réaliser des centaines, voire des milliers de couches, c'est à dire que la machine pourrait réaliser la fabrication additive d'une ou plusieurs pièce(s) complète(s) sans recharger la trémie. De préférence, le rechargement de la trémie est réalisé à un moment où le dispositif de mise en couche n'est pas mis en oeuvre. Le rechargement peut par exemple se faire lorsque la fabrication des pièces est terminée et que les pièces finies sont évacuées avant qu'une nouvelle fabrication commence, mais également pendant les phases de fusion (y compris fusions simultanées sur les deux zones de travail).

La poudre utilisée est de préférence une poudre métallique ou céramique. Selon les types de faisceaux énergétiques mis en oeuvre et selon l'épaisseur de la couche finale visée, le diamètre moyen des particules de la poudre peut varier de quelques microns (par exemple 5 µm) à 300 ou 400 µm.

La description de la machine selon l'invention vient d'être faite à l'appui de représentations de parties gauche et droite de la machine tout à fait symétriques. L'homme du métier comprend cependant qu'il n'est pas nécessaire que les deux parties de la machines soient exactement identiques. L'homme du métier comprend également que les différents modes de réalisation décrits et illustrés ici sont des exemples particuliers de combinaisons de moyens selon l'invention. D'autres combinaisons ou substitutions évidentes des différents moyens avec des moyens équivalents par exemple tels que décrits dans la demande WO 2013/092757 font également partie de l'invention. Par exemple, le principe d'ajouter des cylindres compacteurs de part et d'autres des moyens de répartition comme décrit aux présentes figures 10 et 11 peut être appliqué aux modes de réalisation des figures précédentes. De même, le principe de l'invention d'associer deux zones de travail avec un dispositif de mise en couche commun à ces deux zones de travail peut être mis en oeuvre avec d'autres types de dispositif de mise en couche que ceux décrits dans la présente demande, en particulier avec d'autres types de dispositif de mise en couche que ceux à alimentation par le haut.

## Revendications

1. Machine (1) pour la fabrication additive par frittage ou fusion de poudre (2) à l'aide d'un faisceau énergétique (3) agissant sur une couche de poudre (23) dans une zone de travail (41, 42), ladite machine comprenant un dispositif de mise en couche de ladite poudre, ledit dispositif comprenant :
• des moyens de répartition (6) de la poudre aptes à parcourir la zone de travail afin de répartir la poudre en une couche (23) d'épaisseur finale (24) adaptée à la fabrication additive,
• des moyens d'alimentation (71) aptes à transférer la poudre par gravité aux moyens de répartition,
• des moyens de dosage (81, 82 ; 811, 812) aptes à contrôler la quantité de poudre transférée aux moyens de répartition,
les moyens d'alimentation et les moyens de dosage étant mobiles avec les moyens de répartition, et :
• la machine comportant deux zones de travail distinctes (41, 42),
• la machine comportant deux plateaux de travail (601, 602) distincts et mobiles indépendamment l'un de l'autre,
• chacun des deux plateaux de travail étant associé à une seule des deux zones de travail,
• le dispositif de mise en couche comprenant un chariot mobile (111 ; 111') portant les moyens d'alimentation, les moyens de dosage et les moyens de répartition, ledit chariot mobile étant commun aux deux zones de travail,
• la machine comprenant une zone d'attente centrale (43) située entre les deux zones de travail (41, 42), ladite zone d'attente centrale étant apte à accueillir le chariot mobile du dispositif de mise en couche, et
• le dispositif de mise en couche étant configuré de manière sensiblement symétrique afin d'être apte à parcourir chaque zone de travail en direction de la zone d'attente centrale lors d'une opération de mise en couche,
ladite machine étant **caractérisée en ce que** les moyens de dosage comprennent deux cylindres doseurs rotatifs (811, 812) placés de part et d'autre des moyens de répartition (6), chacun des deux cylindres doseurs étant affectés à l'une des deux zones de travail.

2. Machine selon la revendication 1, dans laquelle les moyens de répartition utilisent un cylindre répartiteur (612) unique et commun aux deux zones de travail.

3. Machine selon la revendication 2, dans laquelle le dispositif de mise en couche comprend deux trémies (521,522) et deux cylindres doseurs rotatifs (811,812) placés de part et d'autre d'un cylindre répartiteur commun (612) au sein du chariot mobile (111').

4. Machine selon l'une des revendications précédentes, comprenant une source propre (11, 12) et des moyens de contrôle du faisceau énergétique (3) propres à chacune des deux zones de travail.

5. Machine selon l'une des revendications précédentes, dans laquelle le dispositif de mise en couche est configuré de manière à réaliser la mise en couche en un seul passage sur une zone de travail.

6. Machine selon la revendication 3, dans laquelle chaque trémie est également portée par le chariot mobile avec les moyens d'alimentation, les moyens de dosage et les moyens de répartition.

7. Machine selon l'une des revendications précédentes, dans laquelle chaque cylindre doseur rotatif (811, 812) est pourvu d'au moins une cavité, de préférence une rainure (821, 822) apte à définir une dose de poudre lors du dosage.

8. Machine selon la revendication 2, dans laquelle la hauteur du cylindre répartiteur est ajustable en fonction de la position angulaire dudit cylindre.

9. Machine selon l'une des revendications précédentes, comprenant en outre deux cylindres de compactage (641, 642) dont le déplacement sur la zone de travail est solidaire du déplacement des moyens de répartition, chacun des deux cylindres de compactage étant affecté à l'une des deux zones de travail.

## Patentansprüche

1. Maschine (1) zur additiven Fertigung durch Sintern oder Schmelzen von Pulver (2) mithilfe eines Energiestrahls (3), der auf eine Pulverschicht (23) in einem Arbeitsbereich (41, 42) einwirkt, wobei die Maschine eine Vorrichtung zur Anordnung des Pulvers in einer Schicht umfasst, wobei die Vorrichtung umfasst:
• Mittel zur Verteilung (6) des Pulvers, die dafür ausgelegt sind, den Arbeitsbereich zu durchfahren, um das Pulver in einer Schicht (23) mit einer endgültigen Dicke (24), die an die additive Fertigung angepasst ist, zu verteilen,
• Zuführungsmittel (71), die dafür ausgelegt sind, das Pulver durch Schwerkraft zu den Verteilungsmitteln zu übertragen,
• Dosierungsmittel (81, 82; 811, 812), die dafür ausgelegt sind, die zu den Verteilungsmitteln übertragene Menge an Pulver zu steuern,
wobei die Zuführungsmittel und die Dosierungsmittel mit den Verteilungsmitteln beweglich sind, und:
• die Maschine zwei verschiedene Arbeitsbereiche (41, 42) aufweist,
• die Maschine zwei verschiedene und unabhängig voneinander bewegliche Arbeitsplatten (601, 602) aufweist,
• jede der zwei Arbeitsplatten einem einzigen der zwei Arbeitsbereiche zugeordnet ist,
• die Vorrichtung zur Anordnung in einer Schicht einen beweglichen Schlitten (111; 111') umfasst, der die Zuführungsmittel, die Dosierungsmittel und die Verteilungsmittel trägt, wobei der bewegliche Schlitten den zwei Arbeitsbereichen gemeinsam ist,
• die Maschine einen zentralen Wartebereich (43) umfasst, der sich zwischen den zwei Arbeitsbereichen (41, 42) befindet, wobei der zentrale Wartebereich dafür ausgelegt ist, den beweglichen Schlitten der Vorrichtung zur Anordnung in einer Schicht aufzunehmen, und
• die Vorrichtung zur Anordnung in einer Schicht auf eine im Wesentlichen symmetrische Weise gestaltet ist, um in der Lage zu sein, jeden Arbeitsbereich bei einem Arbeitsgang der Anordnung in einer Schicht in Richtung des zentralen Wartebereichs zu durchfahren,
wobei die Maschine **dadurch gekennzeichnet ist, dass** die Dosierungsmittel zwei rotierende Dosierwalzen (811, 812) umfassen, die beiderseits der Verteilungsmittel (6) angeordnet sind, wobei jede der zwei Dosierwalzen einem der zwei Arbeitsbereiche zugeordnet ist.

2. Maschine nach Anspruch 1, wobei die Verteilungsmittel eine einzige und den zwei Arbeitsbereichen gemeinsame Verteilerwalze (612) verwenden.

3. Maschine nach Anspruch 2, wobei die Vorrichtung zur Anordnung in einer Schicht zwei Trichter (521, 522) und zwei rotierende Dosierwalzen (811, 812) umfasst, die beiderseits einer gemeinsamen Verteilerwalze (612) innerhalb des beweglichen Schlittens (111') angeordnet sind.

4. Maschine nach einem der vorhergehenden Ansprüche, welche für jeden der zwei Arbeitsbereiche eine zugehörige Quelle (11, 12) und zugehörige Mittel zur Steuerung des Energiestrahls (3) umfasst.

5. Maschine nach einem der vorhergehenden Ansprüche, wobei die Vorrichtung zur Anordnung in einer Schicht dafür ausgebildet ist, die Anordnung in einer Schicht in einem einzigen Durchgang auf einem Arbeitsbereich durchzuführen.

6. Maschine nach Anspruch 3, wobei jeder Trichter ebenfalls von dem beweglichen Schlitten mit den Zuführungsmitteln, den Dosierungsmitteln und den Verteilungsmittel getragen wird.

7. Maschine nach einem der vorhergehenden Ansprüche, wobei jede rotierende Dosierwalze (811, 812) mit wenigstens einem Hohlraum versehen ist, vorzugsweise mit einer Rille (821, 822), die dafür ausgelegt ist, beim Dosieren eine Pulverdosis zu definieren.

8. Maschine nach Anspruch 2, wobei die Höhe der Verteilerwalze in Abhängigkeit von der Winkelposition dieser Walze einstellbar ist.

9. Maschine nach einem der vorhergehenden Ansprüche, welche außerdem zwei Verdichtungswalzen (641, 642) umfasst, deren Bewegung auf dem Arbeitsbereich fest mit der Bewegung der Verteilungsmittel gekoppelt ist, wobei jede der zwei Verdichtungswalzen einem der zwei Arbeitsbereiche zugeordnet ist.

## Claims

1. Machine (1) for additive manufacturing by sintering or melting powder (2) using an energy beam (3) acting on a powder layer (23) in a working zone (41, 42), said machine comprising a device for layering said powder, said device comprising:
• means (6) for distributing the powder that are able to travel over the working zone in order to distribute the powder in a layer (23) having a final thickness (24) suitable for additive manufacturing,
• feeding means (71) that are able to transfer the powder to the distributing means by gravity,
• metering means (81, 82; 811, 812) that are able to control the quantity of powder transferred to the distributing means,
the feeding means and the metering means are able to move with the distributing means, and :
• the machine having two separate working zones (41, 42),
• the machine having two separate working trays (601, 602) that are able to move independently of one another,
• each of the two working trays being associated with only one of the two working zones,
• the layering device comprising a movable carriage (111; 111') carrying the feeding means, the metering means and the distributing means, said movable carriage being common to both working zones,
• the machine comprising a central waiting zone (43) situated between the two working zones (41, 42), said central waiting zone being able to accommodate the movable carriage of the layering device, and
• the layering device being configured in a substantially symmetrical manner so as to be able to travel over each working zone in the direction of the central waiting zone during a layering operation,
said machine being **characterized in that** the metering means comprise two rotary metering rolls (811, 812) positioned on either side of the distributing means (6), each of the two metering rolls being assigned to one of the two working zones.

2. Machine according to Claim 1, wherein the distributing means use a single distributing roll (612) that is common to both working zones.

3. Machine according to Claim 2, wherein the layering device comprises two hoppers (521,522) and two rotary metering rolls (811,812) positioned on either side of a common distributing roll (612) within the movable carriage (111').

4. Machine according to either of the preceding claims, comprising a source (11, 12) and means for controlling the energy beam (3), said source (11, 12) and means being inherent to each of the two working zones.

5. Machine according to one of the preceding claims, wherein the layering device is configured so as to carry out the layering in a single passage over a working zone.

6. Machine according to Claim 3, wherein each hopper is also carried by the movable carriage with the feeding means, the metering means and the distributing means.

7. Machine according to one of the preceding claims, wherein each rotary metering roll (811, 812) is provided with at least one cavity, preferably a groove (821, 822) capable of defining a metered quantity of powder during metering.

8. Machine according to Claim 2, wherein the height of said at least one distributing roll is adjustable depending on the angular position of said roll.

9. Machine according to one of the preceding claims, also comprising two compacting rolls (641, 642), the movement of which over the working zone is as one with the movement of the distributing means, each of the two compacting rolls being assigned to one of the two working zones.
